Europäisches Patentamt

European Patent Office

Office européen des brevets

(19)

(11) Numéro de publication : **0 251 887 B1**

(12) **FASCICULE DE BREVET EUROPEEN**

(45) Date de publication du fascicule du brevet :
09.01.91 Bulletin 91/02

(51) Int. Cl.$^5$ : **E21D 21/00, E21D 20/02**

(21) Numéro de dépôt : 87401430.1

(22) Date de dépôt : 23.06.87

(54) **Boulon de soutènement extensible, méthode de soutènement, utilisation du boulon.**

(30) Priorité : 24.06.86 FR 8609089
30.03.87 FR 8704389

(43) Date de publication de la demande :
07.01.88 Bulletin 88/01

(45) Mention de la délivrance du brevet :
09.01.91 Bulletin 91/02

(84) Etats contractants désignés :
AT BE DE ES GB NL

(56) Documents cités :
WO-A-86/04384
AU-B- 524 865
DE-A- 3 311 145
DE-A- 3 314 858
DE-A- 3 326 428

(56) Documents cités :
DE-C- 3 320 460
FR-A- 2 109 203
FR-A- 2 461 093
GB-A- 1 589 607
GB-A- 2 158 538
US-A- 4 129 007

(73) Titulaire : FORGES ET BOULONNERIES
D'ARS-SUR-MOSELLE
68, rue G. Clémenceau
F-57 130 Ars-Sur-Moselle (FR)

(72) Inventeur : Starczan, Jean-Claude
60, rue des Quarrés Ancy sur Moselle
F-57130 Ars-sur-Moselle (FR)

(74) Mandataire : Bourgognon, Jean-Marie et al
Cabinet Flechner 22, Avenue de Friedland
F-75008 Paris (FR)

## Description

La présente invention concerne un boulon de soutènement extensible, la méthode de soutènement utilisant le boulon et l'utilisation du boulon pour des soutènements. Les boulons de soutènement extensibles ou à géométrie variable, sont destinés à consolider les terrains et plus particulièrement à soutenir la voûte (le toît des galeries dans les mines et ouvrages souterrains). D'autres applications de ce type de boulon peuvent être également des ouvrages à ciel ouvert, tels que des murs, etc...

Il est connu d'utiliser depuis plusieurs années, des boulons en acier ou autres matériaux, qui sont le plus souvent scellés intégralement dans des trous forés d'avance. Un écrou vissé sur la tige filetée dépassant du trou, permet de serrer une plaque de soutènement contre la paroi du terrain ou de la galerie. Le scellement du boulon est obtenu à l'aide d'un ciment organique ou inorganique. A cet effet, on utilise couramment des capsules à enveloppe plastique contenant le ciment. Ces capsules sont introduites dans le trou de forage, puis on enfonce par poussée et/ou rotation le boulon qui va détruire l'enveloppe de la capsule et malaxer les composants. Il se forme ainsi entre le boulon et la paroi du trou, un ciment homogène et dur qui permettra un serrage efficace de la plaque de soutènement sans glissement du boulon.

Une telle réalisation correspond au brevet américain 4 129007 dans lequel l'extrémité comportant l'écrou, après solidarisation avec le ciment de scellement, permet par rotation de la tige dont l'extrémité est filetée de venir mettre en tension la plaque de soutènement.

Il existe également un autre type de boulon à ancrage rigide, tel que celui enseigné par le brevet australien 524 865. Ce boulon comporte un tube déformable dans lequel passe la tige de soutènement et dont l'extrémité introduite au fond du trou comporte un élément qui, au cours du scellement par le ciment, est mise en traction de façon à produire sur le tube une déformation et une expansion latérale du tube, provoquant un ancrage fixe. Cette expansion est utilisée dans le but d'améliorer la friction et la liaison avec le ciment de scellement.

Ces boulons dits rigides ont l'avantage, une fois scellés, de renforcer les terrains mais également de solidariser entre elles des strates de roches plus ou moins homogènes. Cet ancrage rigide est particulièrement efficace lorsque les galeries sont creusées dans des terrains qui resteront vierges par la suite telles que des galeries de longue durée, des tunnels routiers ou ferroviaires, ou lorsque les galeries subiront de faibles déformations. En effet, en raison de leur rigidité, ces boulons ont l'inconvénient de ne pas pouvoir s'opposer dans tous les cas à la pression et à la détente des terrains, lorsque par exemple on est amené à exploiter, entre deux galeries parallèles, par la méthode dite de longue taille, une couche plus ou moins épaisse de charbon ou d'autres minéraux. Dans ces cas, toute la pression s'exerce sur la plaque et sur l'écrou, ce qui peut provoquer une rupture brutale de la partie filetée. Il arrive fréquemment de constater entre la voûte et le sol, ainsi qu'entre les parements, une importante convergence des terrains formant les parois.

Il existe depuis quelque temps des boulons dits coulissants, qui ont l'inconvénient d'être de conception complexe et par conséquent de coût de production élevé. Par ailleurs, ces boulons nécessitent la plupart du temps pour leur pose dans les galeries, un double forage, ce qui rend leur pose plus longue et plus coûteuse.

Il existe également des boulons dits extensibles tels qu'enseignés par la demande de brevet allemand 3 420 360 dans lesquels l'ancrage s'effectue par les deux extrémités reliées entre elles par une partie extensible protégée du contact avec le trou de scellement par un manchon. Ce type de boulon extensible présente l'inconvénient de permettre une extension limitée aux possibilités d'extension de la partie intermédiaire d'une part et, d'autre part, d'avoir pour une dimension déterminée du boulon, une surface d'ancrage des extrémités assez limitée.

La présente invention a pour premier but de pallier les inconvénients de l'art antérieur en proposant un boulon extensible dont la pose soit aussi simple que celle d'un boulon de soutènement à ancrage rigide tout en permettant un bel ancrage et une bonne capacité d'extension du boulon. Par ailleurs, ce boulon extensible devra être de conception simple de façon à être facile à fabriquer et de coût de production modéré.

Ce premier but est atteint par le fait que le boulon de soutènement extensible pour la fixation par scellement dans un forage, constitué d'une tige filetée à une première extrémité et d'un écrou vissé sur cette extrémité filetée, d'une forme particulière sur une deuxième extrémité de la tige, permettant la rupture d'une capsule de scellement enfoncée dans le forage, est caractérisé en ce que la tige entre sa partie filetée et sa deuxième est entourée d'un tube en matériau déformable de résistance mécanique inférieure à la résistance mécanique de la résine de scellement une fois durcie, la forme particulière de la deuxième extrémité de la tige présente un diamètre supérieur au diamètre de la tige et compris entre le diamètre interne et le diamètre externe du tube de matière déformable, une collerette de retenue de la résine de scellement de diamètre supérieur au diamètre extérieur du tube de matière déformable est rendue solidaire de la tige jusqu'à une certaine charge.

Selon une autre caractéristique, la collerette est directement obtenue par forgeage de la tige.

Selon une autre caractéristique, la collerette est soudée sur la tige.

Un deuxième but de l'invention est de proposer une méthode de soutènement extensible.

Ce deuxième but est atteint par le fait que la méthode de soutènement extensible comprend les étapes suivantes :

– forage d'un trou de dimension appropriée ;

– introduction d'une capsule de scellement dans le forage, la capsule comprenant des compartiments différents et destructibles, les composants nécessaires à la prise de la résine de scellement organique ou inorganique ;

– introduction dans le trou de forage d'un boulon en provoquant ou non sa rotation pour assurer la rupture de la capsule et le mélange homogène des composants ; et

– scellement par durcissement de la résine dans le forage caractérisé en ce que le scellement se produit directement sur le tube en matériau déformable entourant le boulon et en ce que la résistance mécanique de ce tube est inférieure à la résistance mécanique de la résine de scellement une fois durcie.

Selon ces premières variantes de l'invention, la partie du tube en matériau déformable est ancrée dans la zone de terrain stable pour permettre, par glissement de la partie renflée à l'intérieur du tube en matériau déformable l'extension du boulon sur une certaine longueur. Cette extension se produit lorsque les couches de terrain instables appuient sur une plaque de maintien qui elle-même est en appui sur l'écrou de solidarisation au boulon. Le type de boulon extensible de ces variantes présente l'inconvénient majeur de faire supporter toute la contrainte par la plaque de soutènement qui est en appui contre l'écrou vissé sur le boulon. Cette sollicitation peut provoquer le cisaillement de la plaque.

Un troisième but de l'invention est de proposer un perfectionnement ayant pour but de pallier l'inconvénient ci-dessus en proposant un boulon de soutènement extensible qui permette de diminuer les risques de cisaillement de la plaque de support des zones instables du terrain.

Ce troisième but est atteint par le fait que le boulon de soutènement extensible pour la fixation par scellement dans un forage, ledit boulon étant constitué d'une tige filetée à une première extrémité et d'un écrou vissé sur cette extrémité filetée, d'une forme particulière sur une deuxième extrémité de la tige permettant la rupture d'une capsule de scellement enfoncée dans le forage, la forme particulière de la deuxième extrémité de la tige se raccordant à la tige par une partie cylindrique de diamètre supérieur au diamètre interne d'un tube de matière déformable entourant cette extrémité et une partie de la tige sur une longueur inférieure à la longueur de la tige, est caractérisé en ce qu'une zone de la tige située entre sa partie filetée et sa deuxième extrémité devant être ancrée dans les couches stables du forage est entourée du tube en matière déformable, et en ce qu'une zone de la tige située entre la partie filetée et l'extrémité du tube de matière déformable est scellée directement sur la zone instable de terrain.

Un autre but de l'invention est d'améliorer l'ancrage du boulon sur la zone instable de terrain.

Ce but est atteint par le fait que le boulon comporte, entre la zone d'extrémité du tube de matière déformable et la zone du pas de vis de la tige, des zones de surépaisseur du profil améliorant l'ancrage de la résine de scellement.

Selon une disposition avantageuse, ces zones de surépaisseur comportent un filetage.

Un autre but de l'invention est de proposer un boulon de soutènement extensible qui soit également utilisable dans les terrains dont on ne connait pas exactement la délimitation entre la zone stable et la zone instable.

Ce but est atteint par le fait que le boulon comporte une bague coulissante, d'une part entre le tube de matière déformable et, d'autre part, entre une première zone de surépaisseur.

Un autre but de l'invention est de proposer un boulon extensible sur une certaine course et un ancrage rigide à la fin de cette course.

Ce but est atteint par le fait que le boulon de soutènement extensible comporte un manchon métallique composé d'un cylindre fendu ou de deux demi-cylindres rendus solidaires de la tige du boulon afin de produire un scellement rigide du boulon en fin d'extension.

Selon une autre disposition avantageuse, le tube de matière déformable présente une surface crénelée disposée, soit en hélice, soit selon des plans perpendiculaires à l'axe de symétrie de la tige.

Un avant-dernier but de l'invention est de proposer une amélioration à la méthode de soutènement extensible.

Ce but est atteint par le fait que l'amélioration à la méthode comprend en outre l'étape suivante :

– scellement sur la zone de la tige située entre le tube de matériau déformable et l'extrémité filetée.

Un dernier but de l'invention est de proposer une utilisation du boulon.

Ce dernier but est atteint par le fait que le boulon est utilisé pour le soutènement de galeries de mine, de tout ouvrage souterrain, et de tout ouvrage à ciel ouvert, dans lequel on cherche à solidariser entre elles des strates de roches plus ou moins homogènes et où il est nécessaire de contrôler la détente des terrains.

D'autres caractéristiques et avantages de la présente invention apparaîtront plus clairement à la lecture de la description ci-après de modes de réalisation de l'invention, donnés à titres d'exemples non limitatifs, et décrits en liaison avec les figures ci-après dans lesquelles :

– la figure 1 représente une vue en coupe du boulon extensible à ancrage rigide en fin de course scellé dans une strate de terrain ;

– la figure 2 représente une vue en coupe du boulon extensible à ancrage non rigide en fin d'extension, lors de la mise en place dans un forage ;

– La figure 3 représente un diagramme figurant l'évolution de l'allongement du boulon en fonction de l'accroissement des pressions de terrains.

– La figure 4 représente une vue en coupe d'un perfectionnement du boulon extensible à ancrage rigide en fin de course ;

– La figure 5 représente une vue en coupe d'un perfectionnement du boulon à ancrage non rigide en fin d'extension.

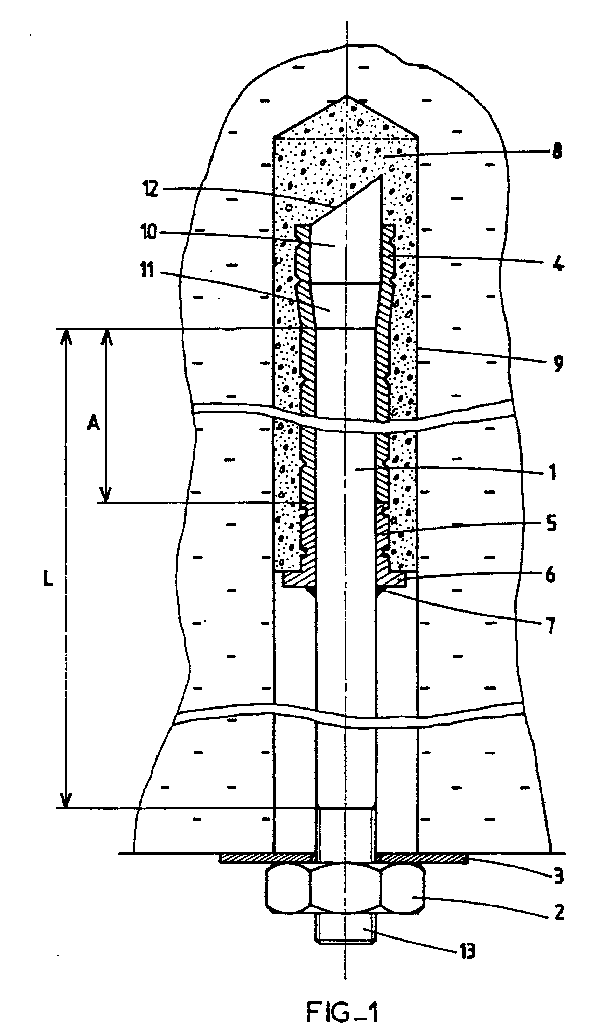

Le boulon, suivant l'invention, est constitué, comme représenté à la figure 1, d'une tige (1) filetée à une extrémité et usinée à l'autre extrémité (10). L'extrémité usinée (10) est séparée de l'extrémité filetée par une tige de longueur L. La partie usinée (10) a un diamètre supérieur au diamètre de la tige de longueur L. Cette tige de longueur L est raccordée à l'extrémité usinée (10) par une portion conique (11). L'extrémité usinée (10) est pourvue par exemple d'un biseau qui, comme on le verra par la suite, permet la rupture des capsules de scellement. Il est bien évident que ce biseau peut être remplacé par toute autre forme remplissant la même fonction. Un tube de matière déformable (4) crénelé ou pas sur sa surface extérieure entoure la tige (1) et une partie de l'extrémité usinée (10) du boulon. La longueur du tube de matière déformable (4) est telle que la distance (A) séparant la portion conique raccordée à la tige (1) de l'extrémité du tube (4) entourant la tige (1) correspond à la distance d'extension maximum que l'on souhaite pour le boulon. Le boulon représenté à la figure 1 étant un boulon extensible à ancrage rigide en fin de course, comporte, comme on peut le voir sur la figure 1, un manchon métallique (5) composé soit d'un tube cylindrique fendu ou de deux demi-cylindres rendus solidaires d'une collerette (6) qui est elle-même soudée par une soudure (7) sur la tige (1) du boulon. Ce manchon (5) et cette collerette (6) sont soudés à une distance (A) de la partie conique (11) du boulon, distance qui correspond à l'extension maximale. La liaison (7) du manchon métallique sur la tige (1) est étudiée pour céder dès que le boulon subit des pressions supérieures à 2 ou 3 tonnes.

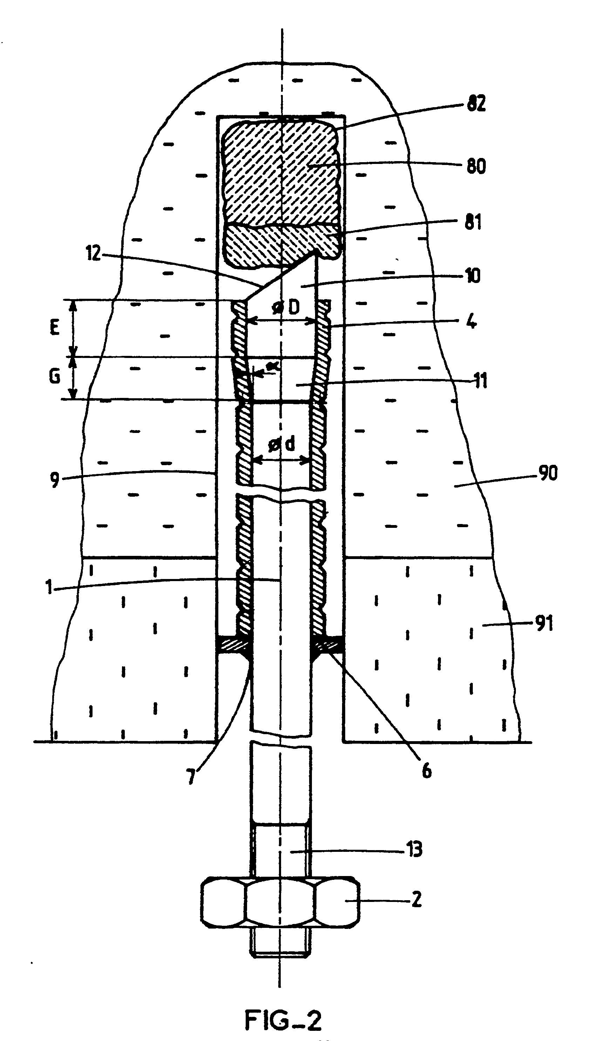

La figure 2 représente une deuxième variante d'un boulon extensible lors de son introduction dans le forage avant la rupture de la capsule de scellement (82) contenant les composants nécessaires au scellement, par exemple, de la résine polyester (80) et un catalyseur (81). Le boulon de cette deuxième variante se différencie du boulon de la figure 1 par le fait qu'il ne comprend pas le manchon métallique (5) et que la collerette (6) est directement liée sur la tige (1) par la soudure (7) et se trouve en contact avec l'extrémité du tube en matériau déformable (4). Dans les variantes des figures 1 et 2, la surface externe du tube de matière déformable (4) peut être crénelée suivant une forme hélicoïdale de façon à être assimilée à un pas de vis de sens inverse à celui du sens de rotation du boulon.

Pour effectuer le scellement, on introduit une des variantes du boulon dans le trou de forage (9) au fond duquel on a préalablement disposé la capsule (82). Cette capsule de scellement est calculée de façon que le volume de ciment permette le scellement de l'ensemble du tube déformable et du manchon métallique, une fois que le scellement est effectué. En enfonçant le boulon au fond du trou (9) tout en lui communiquant un mouvement de rotation, on provoque la rupture des différents compartiments de la capsule de scellement (82) et le mélange des composants. Ce mélange est facilité par le fait que le tube de matériau déformable (4) comporte sur sa surface externe, une rainure hélicoïdale en pas de vis. La collerette (6) permet de contenir le ciment de scellement sur les parties à sceller. Une fois la prise du ciment de scellement effectuée, le tube en matériau déformable et le manchon métallique (5) sont totalement solidaires du ciment (8) et des couches de terrain (90) et (91).

Lorsque le scellement est assuré, dans la couche de terrain (90) ayant une bonne résistance mécanique, on vient assurer le soutènement de la couche de terrain (91) par une plaque (3) que l'on maintient au moyen de l'écrou (2) vissé sur le filetage (13) comme représenté à la figure 1.

Lorsque par suite des mouvements de terrain les pressions appliquées à la partie filetée (13) du boulon atteignent une certaine valeur (2 à 3 tonnes), la soudure (7) cède. Les pressions appliquées à la partie filetée du boulon continuent à croître et lorsqu'elles atteignent une certaine valeur (par exemple 10 tonnes), la partie usinée (10) comprime, tout en le déformant, le tube de matière déformable offrant une résistance constante jusqu'à l'extension maximum qui est fonction de la distance (A). Lorsque, par suite de la déformation du terrain, la partie conique (11) se trouvant à proximité de la partie usinée (10) vient en contact avec le manchon métallique (5), ce dernier ayant une résistance mécanique bien supérieure à celle du tube de matière déformable, va provoquer l'ancrage rigide du boulon. En effet, les deux demi-cylindres vont s'écarter lors du passage de la partie conique (11) et vont jouer le rôle de cheville de scellement, stoppant ainsi l'extension du boulon.

Dans la variante d'exécution de la figure 2, ce phénomène d'ancrage rigide en fin d'extension ne se produira pas puisque, bien évidemment, cette variante ne comporte pas le manchon métallique (5).

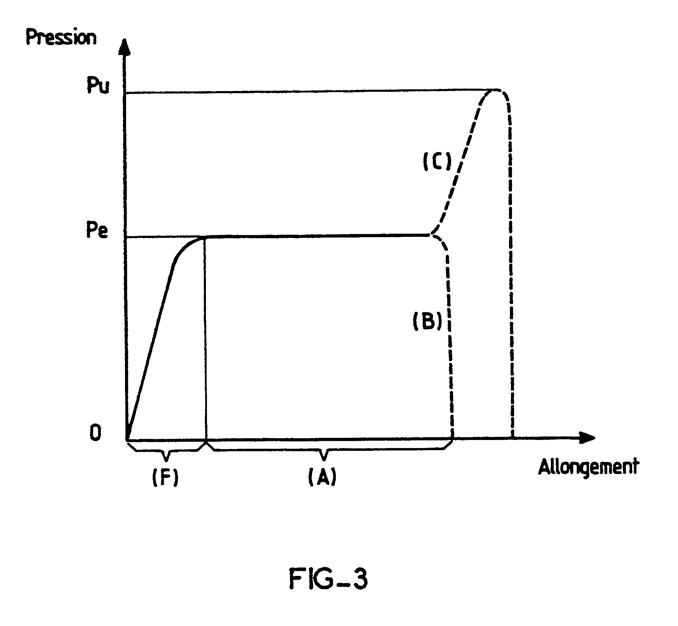

La figure 3 montre comment évolue l'allongement du boulon en fonction de l'accroissement des pressions de terrain. Dans un premier stade F, l'allongement est faible. Lorsque l'on atteint une pression $P_E$

le boulon s'allonge de façon régulière jusqu'à l'allongement (A). En fin d'allongement, si l'on utilise le boulon de la figure 1, on obtient un scellement rigide, ce qui entraîne une possibilité d'accroissement de pression sur le boulon jusqu'à une pression ultime PU égale à la résistance mécanique de la tige (tracé C). Dans le cas où l'on utilise le boulon à extension sans ancrage rigide, la résistance s'opposant à la pression du terrain devient nulle en fin d'allongement, comme représenté par le tracé B.

L'incidence des caractéristiques dimensionnelles des parties usinées (10) et (11) sur la pression nécessaire aux coulissements de la partie (10) dans le tube (4) est fonction des cotes E, G, du diamètre D et de l'angle α. Par ailleurs, la résistance à l'allongement est aussi fonction des dimensions du tube de matière déformable, diamètres intérieur et extérieur du tube. A titre d'exemple pour les valeurs suivantes :

$$\text{Diamètre } D = 22,3 \text{ mm}$$
$$E = 50 \text{ mm}$$
$$G = 12 \text{ mm}$$
$$\text{Angle } \alpha = 8°$$
$$\text{Diamètre } d = 19 \text{ mm}$$

et pour une matière déformable telle que du PVC et un diamètre intérieur du tube (4) de 19,3 mm et un diamètre extérieur de 25 mm et avec un ciment de scellement constitué d'une résine polyester, la charge nécessaire à l'extension du boulon est de l'ordre de 120000 à 135000 daN.

Le tube (4) étant scellé directement dans le ciment et le boulon (1) coulissant dans ce tube (4), ceci permet d'effectuer un soutènement extensible des galeries de mine des ouvrages souterrains ou toute sorte d'ouvrages particuliers nécessitant de soutenir des strates différentes de terrain. C'est ainsi que l'on estime que 20% seulement des galeries à creuser dans l'avenir pourront être boulonnées avec des boulons rigides, tandis que dans 80% des cas, il faudra avoir recours à un boulon extensible ou à un soutènement porteur. Ainsi, en plus de la simplicité de fabrication et d'utilisation du boulon de l'invention, on comprend son intérêt économique important.

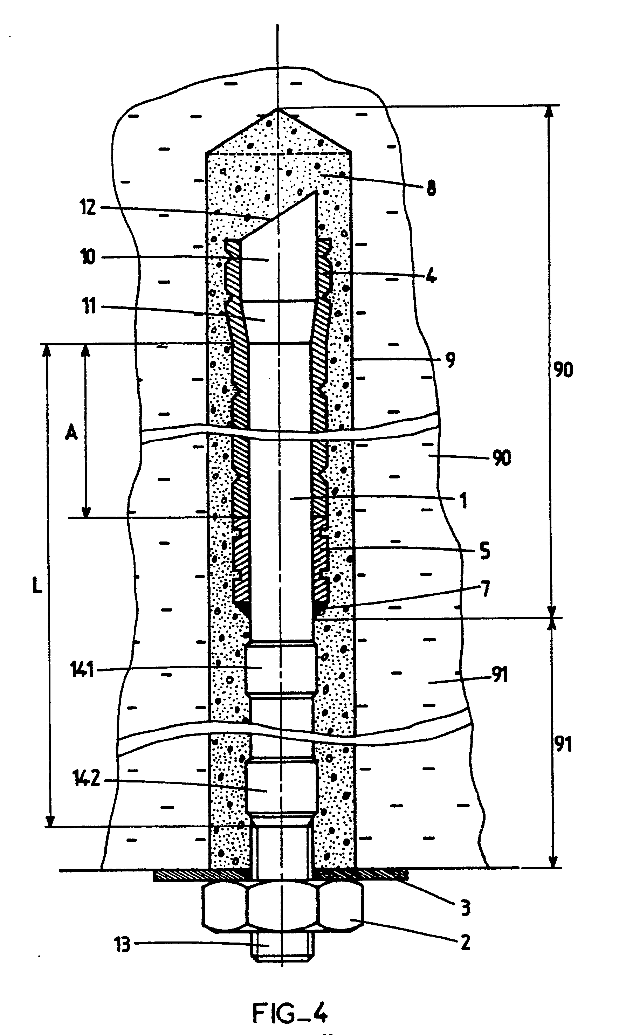

Une autre variante de perfectionnement du boulon extensible est représentée à la figure 4 sur laquelle les éléments identiques aux éléments des figures précédentes portent les mêmes références.

Comme on peut le voir sur la figure 4, un manchon métallique (5) est composé soit d'un tube cylindrique fendu ou de deux demi-cylindres rendus solidaires par une soudure ou tout autre moyen (7) de la tige (1) du boulon. Ce manchon (5) est soudé à une distance (A) de la partie conique (11) du boulon, distance qui correspond à l'extension maximale. La liaison (7) du manchon métallique sur la tige (1), est étudiée pour céder dès que le boulon subit des pressions supérieures à 2 ou 3 tonnes. La partie de la tige (1) qui ne se trouve entourée ni par le tube de matériau déformable (4) ni par le manchon métallique (5) et correspondant à la zone de tige devant se trouver dans la zone instable (91) de terrain, comporte, comme on peut le voir à la figure 4, un premier renflement ou zone de surépaisseur (141) supportant à sa périphérie un filetage, ou des nervures, ou gorges d'orientation permettant un bon ancrage du matériau de scellement (8) sur cette partie (141). Cette première zone est suivie d'une ou plusieurs zones de surépaisseur (142) disposées à proximité de la partie filetée (13) de la tige (1). Ces zones (142) sont également de diamètre supérieur au diamètre de la tige (1) et comportent sur leur périphérie soit un filetage, soit des nervures ou gorges. Le scellement d'une des deux variantes du boulon s'effectue dans le trou de forage (9) au fond duquel on a préalablement disposé une capsule de scellement (2) dont le volume de ciment permet le scellement de l'ensemble du boulon dans la zone stable (90) aussi bien que dans la zone instable (91) du terrain. Ainsi, comme on peut le voir à la figure 4, une fois le scellement effectué dans le terrain de la façon indiquée, le tube (4) de matériau déformable et l'anneau d'ancrage rigide sont solidaires du matériau de scellement dans la zone de terrain stable, tandis que les parties en surépaisseur (141), (142) de la tige sont solidaires du matériau de scellement situé dans la zone de terrain instable (91). De cette façon, lorsqu'il y a désolidarisation d'une partie de la zone de terrain instable (91), la partie que s'est désolidarisée étant liée mécaniquement par le matériau de scellement à la tige (1), le matériau de scellement situé au-dessus de la zone de désolidarisation (8) va se rompre et des micro-ruptures vont se propager successivement en direction de la partie de la tige qui est ancrée dans la zone de terrain stable. A partir de ce moment-là, le boulon va avoir tendance à glisser dans la gaine du tube (4) sous l'effort des pressions exercées par la zone instable (91) de terrain. Par la suite, l'utilisation et le fonctionnement du beulon est identique à celle décrite plus haut et la partie renflée (10) du boulon glisse dans le tube (4) jusqu'au moment où elle rencontre l'anneau d'ancrage rigide (5).

L'avantage du scellement de la zone instable (91) de terrain sur la partie inférieure de la tige du boulon comportant les surépaisseurs (141), (142) est constitué par le fait que les forces de traction ou de pression provoquant l'extension ne s'appliquent pas uniquement sur la plaque (3) de soutènement de la zone instable, mais sont également réparties sur les zones de surépaisseur (141), (142) de la tige par le matériau de scellement. Ceci permet donc d'éviter le cisaillage de la plaque (3).

Par suite, lorsque le scellement est effectué, le boulon est solidaire de la zone stable de terrain par un tube déformable et des zones instables (91) par les filetages (141), (142). Lorsque, par suite des mouvements de terrain, les pressions appliquées par la plaque (3) et les parties filetées (141), (142) sur le boulon atteignent une certaine valeur (2 à 3 tonnes), la soudure (7) du manchon métallique (5) cède. Les pressions appliquées sur la tige continuent à croître et lorsqu'elles atteignent une certaine valeur (par exemple 10 tonnes), la partie usinée (10) comprime, tout en le déformant, le tube de matière déformable (4) offrant une résistance constante jusqu'à l'extension maximum qui est fonction de la distance (A). Cette déformation est rendue possible par le fait que la résistance mécanique du tube (4) à la compression est inférieure à la résistance mécanique à la compression de la résine de scellement (8). . Lorsque par suite de la déformation du terrain, la partie conique (11) se trouvant à proximité de la partie usinée (10) vient en contact avec le manchon métallique (5), ce dernier ayant une résistance mécanique bien supérieure à celle du tube de matière déformable (4), va provoquer l'ancrage rigide du boulon dans la zone stable (90) de terrain par effet de coin.

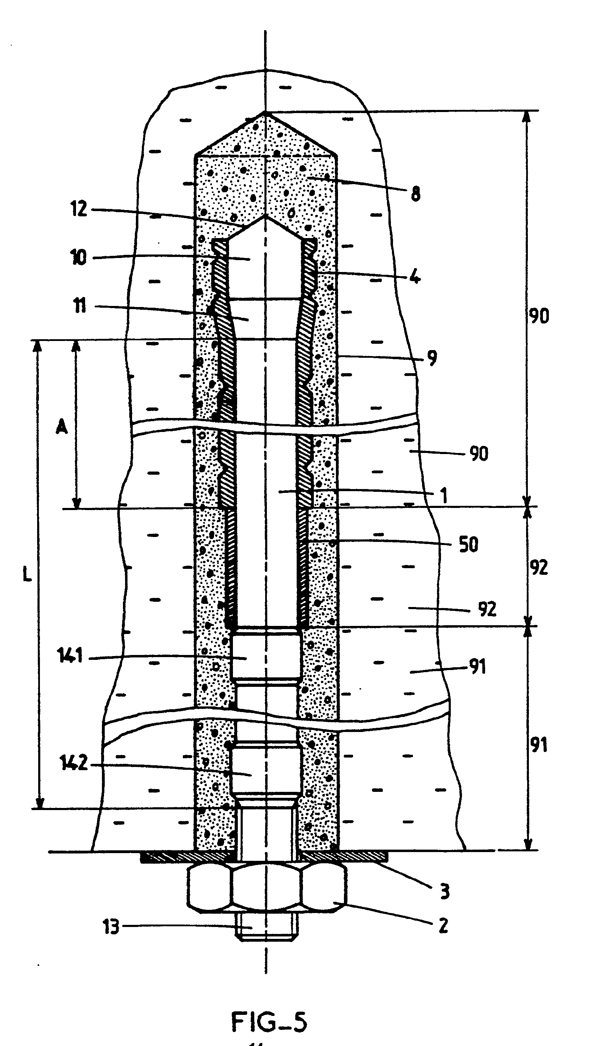

La figure 5 représente une dernière variante de boulon extensible se différenciant du boulon de la figure 4 par le fait qu'il ne comprend pas le manchon (5) d'ancrage rigide qui est remplacé par une bague coulissante (50) en appui à une de ses extrémités avec une partie filetée (141) et à l'autre extrémité avec le tube en matériau déformable (4).

Dans la variante de la figure 5, le phénomène d'ancrage rigide, provoqué par l'anneau d'ancrage (5) ne se produira pas en fin d'extension. Par ailleurs, dans cette variante, la bague coulissante (50) permet le fonctionnement du boulon extensible dans un terrain pour lequel on ne connait pas exactement la zone de la limite de séparation entre la zone de terrain stable (90) et la zone de terrain instable (91). Ceci permet d'éviter d'ancrer, de façon non extensible, une partie de la tige du boulon sur une zone qui pourrait être stable. La zone de propriété indéfinie est représentée sur la figure 5 par la référence (92).

Dans les variantes des figures 4 et 5, la surface externe du tube de matière déformable (4) peut être crénelée suivant une forme hélicoïdale de façon à être assimilée à un pas de vis de sens inverse à celui du sens de rotation du boulon.

On a ainsi défini un boulon extensible permettant de limiter les efforts de cisaillement sur la plaque (3) de support et pouvant être utilisé dans un terrain dont on ne connait pas très bien les limites de séparation entre les zones stables et instables. Il est bien évident que la bague coulissante (50) peut également être montée sur la variante de réalisation à ancrage rigide représentée à la figure 4.

## Revendications

1. Boulon extensible de soutènement pour la fixation par scellement dans un forage, constitué d'une tige filetée (1) à une première extrémité et d'un écrou (2) vissé sur cette extrémité filetée (13), d'une forme particulière (10) sur une deuxième extrémité de la tige (1) permettant la rupture d'une capsule de scellement (82) enfoncée dans le forage (9), caractérisé en ce que la tige (1), entre sa partie filetée (13) et sa deuxième extrémité (10) est entourée d'un tube (4) en matériau déformable, de résistance mécanique inférieure à la résistance mécanique de la résine de scellement une fois durcie, la forme particulière (10) de la deuxième extrémité de la tige présente un diamètre (D) supérieur au diamètre (d) de la tige et compris entre le diamètre interne et le diamètre externe du tube (4) de matière déformable, une collerette (6) de retenue de la résine de scellement de diamètre supérieur au diamètre extérieur du tube (4) de matière déformable est rendue solidaire de la tige (1) jusqu'à une certaine charge.

2. Boulon suivant la revendication 1, carac-térisé en ce que la collerette est directement obtenue par forgeage de la tige.

3. Boulon suivant la revendication 2, carac-térisé en ce que la collerette est soudée sur la tige.

4. Boulon suivant les revendications 1 à 3, carac-térisé en ce qu'un manchon métallique (5) composé d'un cylindre fendu ou de deux demi-cylindres est monté entre le tube (4) et la collerette (6) afin de produire un scellement rigide du boulon en fin d'extension.

5. Méthode de soutènement extensible comprenant les étapes suivantes :
   - forage d'un trou (9) de dimension appro-priée ;
   - introduction d'une capsule (82) de scelle-ment dans le forage (9), la capsule comprenant dans des compartiments différents et destructibles, les composants nécessaires à la prise de la résine de scellement organique ou inorganique ;
   - introduction dans le trou de forage (9) d'un boulon selon une des revendications précédentes en provoquant sa rotation pour assurer la rupture de la capsule (82) et le mélange homogène des deux composants ; et
   - scellement par durcissement de la résine dans le trou de forage (9), directement sur le tube (4) en matériau déformable entourant ce boulon, caractérisé en ce que la résistance mécanique de ce tube est inférieure à la résistance mécanique de la résine de scellement, une fois durcie ;
   - mise en contrainte du boulon par vissage de l'écrou sur la tige filetée.

6. Boulon extensible de soutènement pour la fixation par scellement dans un forage d'un terrain comprenant une zone stable (90) et une zone instable (91), ledit boulon étant constitué d'une tige filetée (1) à une première extrémité et d'un écrou (2) vissé sur cette extrémité filetée (13) d'une forme particulière (12) sur une deuxième extrémité de la tige (1) permettant la rupture d'une capsule de scellement enfoncée dans le forage (9) du terrain, la forme parti-culière (12) de la deuxième extrémité de la tige se raccordant à la tige (1) par une partie cylindrique (10) de diamètre D supérieur au diamètre interne d'un tube (4) de matière déformable entourant cette extrémité et une partie de la tige (1) sur une longueur inférieure à la longueur de la tige, caractérisé en ce qu'une zone de la tige (1) entourée du tube (4) en matière déformable et située entre sa partie filetée (13) et sa deuxième extrémité (10) est ancrée dans les couches stables (90) du forage (9) est et en ce qu'une zone de la tige (1) située entre la partie filetée (13) et l'extrémité du tube (4) est scellée directement sur la zone instable (91) du terrain et en ce que la résistance mécanique, à la compression, du tube de matière déformable (4) est inférieure à la résistance mécanique, à la compression, de la résine de scellement (8).

7. Boulon selon la revendication 6, caractérisé en ce qu'il comporte entre la zone d'extrémité du tube de matière déformable (4) et la zone de filetage (13) une seule ou plusieurs zones de surépaisseur (141), (142) de profil améliorant l'ancrage de la résine de scellement (8).

8. Boulon selon la revendication 7, carac-térisé en ce que les zones de surépaisseur (141), (142) comportent également un filetage.

9. Boulon selon la revendication 8, caractérisé en ce qu'il comporte une bague coulissante (50) entre le tube de matière déformable (4) et une zone de surépaisseur (141).

10. Boulon selon les revendications 1 à 4 ou 6 à 9, caractérisé en ce que le tube (4) de matière déformable présente une surface crénelée suivant des plans perpendiculaires à l'axe de symétrie de la tige.

11. Boulon selon les revendications 1 à 4 ou 6 à 9, caractérisé en ce que le tube (4) de matière déformable présente une surface crénelée suivant une trajectoire hélicoïdale.

12. Méthode de soutènement extensible selon la revendication 5 comprenant en outre l'étape suivante :

– scellement sur la zone de la tige située entre le tube (4) de matériau déformable et l'extrémité filetée (13).

13. Utilisation du boulon suivant l'une des revendications 1 à 4 et 6 à 11 pour le soutènement d'une galerie de mine, de tout ouvrage souterrain et de tout ouvrage à ciel ouvert.

**Ansprüche**

1. Verlängerbarer Ausbaubolzen zur Befestigung durch Einmauern in einer Bohrung, welcher aufweist:

einen an einem ersten Ende mit einem Gewinde versehenen Stift (1) und einer auf das mit dem Gewinde (13) versehenen Ende aufgeschraubten Schraubenmutter (2) ;

eine den Bruch einer eingemauerten Kapsel (82), die im Bohrloch (9) eingebracht ist, ermöglichende spezielle Form (10) an einem zweiten Ende des Stiftes (1) ; dadurch gekennzeichnet, daß der Stift (1) zwischen seinem Gewindeabschnitt (13) und seinem zweiten Ende (10) von einer Röhre (4) aus deformierbarem Material umgeben ist, welches eine geringere mechanische Festigkeit als diejenige des einmal gehärteten Vergußharzes aufweist,

wobei die spezielle Form (10) am zweiten Ende des Stiftes einen Durchmesser (D) aufweist, welcher größer ist als der Durchmesser ($\alpha$) des Stiftes, und

einen zwischen dem inneren und dem äußeren Durchmesser der Röhre (4) aus deformierbarem Material angeordneten Haltekragen (6) aus Vergußharz mit größerem Durchmesser als dem äußeren Durchmesser der Röhre (4) aus deformierbarem Material aufweist, welcher mit dem Stift (1) bis zu einer bestimmten Belastung einstückig ausgebildet ist.

2. Bolzen nach Anspruch 1, dadurch gekennzeichnet, daß der Kragen direkt aus einem Schmiedevorgang des Stiftes erhalten wurde.

3. Bolzen nach Anspruch 2, dadurch gekennzeichnet, daß der Kragen auf den Stift aufgeschweißt ist.

4. Bolzen nach den Ansprüchen 1 bis 3, dadurch gekennzeichnet, daß eine Metallmanschette (5), bestehend aus einem geschlitzten Zylinder oder aus zwei Halbzylindern, zwischen der Röhre (4) und dem Kragen (6) angeordnet ist, um ein starres Einmauern dem Bolzens am Ende der Verlängerung vorzusehen.

5. Verfahren zum verlängerbaren Ausbauen, welches die folgenden Schritte aufweist.

Bohren eines Bohrloches (9) mit einem geeigneten Durchmesser ;

Einführen einer einzumauernden Kapsel (82) in das Bohrloch (9), wobei die Kapsel n verschiedenen und zersetzlichen Abschnitten die für das Festwerden eines organischen oder anorganischen Vergußharzes notwendigen Bestandteile aufweist ;

Einführen eines Bolzens nach einem der vorhergehenden Ansprüche in das Bohrloch (9) mittels Drehen, um ein Brechen der Kapsel (82) und ein homogenes Mischen der beiden Bestandteile sicherzustellen ; und

Einmauern durch Erhärten dem Harzes im Bohrloch (9), direkt auf der Röhre (4) aus deformierbarem Material, welche den Bolzen umschließt, dadurch gekennzeichnet, daß die mechanische Festigkeit dieser Röhre geringer ist als die mechanische Festigkeit des geharteten Vergußharzes ; und der Schritt vorgesehen ist :

Unter-Spannung-Setzen des Bolzens mittels Festziehen der Schraubenmutter auf dem mit einem Gewinde versehenen Stift.

6. Verlängerbarer Ausbaubolzen zur Befestigung durch Einmauern in ein Bohrloch eines Gebietes, welches eine stabile (90) und eine instabile Zone (91) aufweist, wobei der Bolzen einen an einem ersten Ende mit einem Gewinde versehenen Stift (1) und eine Schraubenmutter (2), welche auf das mit dem Gewinde (13) versehene Ende geschraubt wird, und eine an einem zweiten Ende des Stiftes (1) vorgesehene spezielle Form (12) aufweist, welche das Brechen einer einzumauernden Kapsel erlaubt, die in das in das Gebiet gebohrte Bohrloch (9) eingebracht ist, wobei die spezielle Form (12) an dem zweiten Ende des Stiftes verbunden ist mit dem Stift (1) mittels einem zylindrischen Teil (10) mit einem Durchmesser D, welcher größer ist als der innere Durchmesser einer Röhre (4) aus deformierbarem Material, welche dieses Ende und einen Teil des Stiftes (1) auf einer kleineren Länge als der Länge des Stiftes umschließt, dadurch gekennzeichnet, daß eine Zone des Stiftes (1), welche von der Röhre (4) aus deformierbarem Material umgeben ist und zwischen dessen Gewindeabschnitt (13) und dessen zweiten Ende (10) angeordnet ist, in den stabilen Schichten (90) des Bohrloches (9) verankert ist, und eine Zone des Stiftes (1), welche zwischen dem Gewindeabschnitt (13) und dem Ende der Röhre (4) liegt, direkt an der instabilen Zone (91) des Geländes eingemauert ist, und die mechanische Festigkeit der Röhre (4) aus deformierbarem Material unter Druck kleiner ist als die mechanische Festigkeit des Vergußharzes (8).

7. Bolzen nach Anspruch 6, dadurch gekennzeichnet, daß er zwischen dem Außenabschnitt der Röhre aus deformierbarem Material (4) und dem Gewindeabschnitt (13) eine einzige oder mehrere Profilverdickungen (141, 142) aufweist, welcher die Verankerung des Vergußharzes (8) verbessert.

8. Bolzen nach Anspruch 7, dadurch gekennzeichnet, daß die verdickten Abschnitte (141, 142) ebenfalls ein Gewinde aufweisen.

9. Bolzen nach Anspruch 8, dadurch gekennzeichnet, daß er einen Gleitring (50) zwischen der Röhre aus deformierbarem Material (4) und einem verdickten Abschnitt (141) aufweist.

10. Bolzen nach den Ansprüchen 1 bis 4 oder 6 bis 9, dadurch gekennzeichnet, daß die Röhre aus deformierbarem Material (4) eine senkrecht zur Symmetrieachse des Stiftes verlaufend gerippte Oberfläche aufweist.

11. Bolzen nach Anspruch 1 bis 4 oder 6 bis 9, dadurch gekennzeichnet, daß die Röhre aus deformierbarem Material (4) eine schraubenförmig verlaufend gerippte Oberfläche aufweist.

12. Verlängerbares Ausbauverfahren nach Anspruch 5, welcher des weiteren den folgenden Schritt aufweist : Einmauern auf dem Abschnitt des Stiftes, welcher zwieschen der Röhre aus deformierbarem Material (4) und dem Gewindeende (13) liegt.

13. Verwendung des Bolzens nach einem der Ansprüche 1 bis 4 oder 6 bis 11 zum Ausbau eines Stollens, einer Einrichtung unter Tage, und einer Einrichtung über Tage.

**Claims**

1. An extensible supporting bolt for securing by sealing in a bore, consisting of a rod (1) **threaded** at a first end and a nut (2) screwed to this threaded end (13), of a special shape (10) on a second end of the rod (1) enabling the rupture of a sealing capsule (82) submerged in the bore (9), characterised in that the rod (1), between its threaded section (13) and its second end (10), is surrounded by a tube (4) of deformable material, with a mechanical resistance which is lower than the mechanical resistance of the sealing resin, once hardened, the special shape (10) of the second end of the rod (1) having a diameter (D) which is greater than the diameter (d) of the rod, and included between the internal diameter and the external diameter of the tube (4) of deformable material, wherein a collar (6) for retaining the sealing resin of a greater diameter than the external diameter of the tube (4) of deformable material, is made fast with the rod (1) up to a certain load.

2. A bolt according to claim 1, characterised in that the collar is obtained directly by forging the rod.

3. A bolt according to claim 2, characterised in that the collar is welded onto the rod.

4. A bolt according to claims 1 to 3, characterised in that a metallic sleeve (5), consisting of a split cylinder or two half cylinders, is mounted between the tube (4) and the collar (6) in order to produce a rigid sealing of the bolt at the end of the extension.

5. A method of extensible support comprising the following steps :
   – boring a hole (9) of the appropriate dimension ;
   – introduction of a sealing capsule (82) in the bore (9), the capsule comprising in different and destructible compartments, the necessary components for the organic or inorganic sealing resin to set ;
   – introduction into the hole of the bore (9) of a bolt according to one of the preceding claims causing rotation thereof to insure rupture of the capsule (82) and the homogeneous mixture of the two components ; and
   – sealing by hardening of the resin in the hole of the bore (9), directly on the tube (a) of deformable material surrounding this bolt, characterised in that the mechanical resistance of this tube is lower than the mechanical resistance of the sealing resin once it has hardened ;
   – restraint of the bolt by screwing the nut on the threaded rod.

6. An extensible supporting bolt for securing by sealing in a bore of a terrain comprising a stable zone (90) and an unstable zone (91), said bolt being comprised of a rod (91) threaded at a first end and of a nut (2) screwed on thin threaded end (13), of a special shape (12) on a second end of the rod (1) enabling the rupture of a sealing capsule submerged in the bore (9) of the terrain, the special shape (12) of the second end of the rod being connected to the rod (1) by a cylindrical section (10) of a greater diameter D than the internal diameter of a tube (4) of deformable material surrounding this end and a section of the rod (1) along a length which is shorter than the length of the rod, characterised in that the zone of the rod (1) surrounded by the tube (4) of deformable material and located between its threaded section (13) and its second end (10) is anchored in the stable layers (90) of the bore (9) and in that a zone of the rod (1), located between the threaded section (13) and the end of the tube (4), is sealed directly on the unstable zone (91) of the terrain and in that the mechanical resistance to pressure of the tube of deformable material (4) is less than the mechanical resistance to pressure of the sealing resin (8).

7. A bolt according to claim 6, characterised in that it comprises between the zone of the end of the tube of deformable material (4) and the threaded zone (13) one single or several zones of extra thickness (141), (142) of a profile improving the anchorage of the sealing resin (8).

8. A bolt according to claim 7, characterised in that the zones of excessive thickness (141), (142) also comprise a threading.

9. A bolt according to claim 8, characterised in that it comprises a sliding ring (50) between the tube of deformable material (4) and a zone of extra thickness (141).

10. A bolt according to claims 1 to 4, or 6 to 9, characterised in that the tube (4) of deformable material has a ribbed surface following the perpendicular planes to the axis of symmetry of the rod.

11. A bolt according to claims 1 to 4, 6 to 9, characterised in that the tube (4) of deformable material has a ribbed surface along a helicoidal path.

12. A method of extensible support according to claim 5, comprising furthermore the following step :

— sealing in the zone of the rod located between the tube (4) of deformable material and the threaded end (13).

13. Use of the bolt according to one of claims 1 to 4, and 6 to 11, for supporting a mining tunnel, for any underground work and for any work on the surface.

FIG_1

10

FIG_2

11

FIG_3

FIG_4

FIG_5

14